# EUROPEAN PATENT SPECIFICATION

(11) **EP 1 864 464 B1**
(45) Date of publication and mention of the grant of the patent: **19.07.2017**
(21) Application number: 06710125.3
(22) Date of filing: 20.03.2006
(51) Int. Cl.: H04L 29/06, H04L 29/12

(54) **PROVIDING AN IP MULTIMEDIA COMMUNICATION SESSION TO A MOBILE USER EQUIPMENT**
BEREITSTELLUNG EINER IP-MULTIMEDIA-KOMMUNIKATIONSSITZUNG AN EINEM MOBILENDGERÄT
APPAREIL ET PROCEDE DE TELECOMMUNICATION

(30) Priority: 22.03.2005 GB 0505838
(43) Date of publication of application: 12.12.2007
(73) Proprietor: 3G Licensing S.A., 2132 Luxembourg (LU)
(72) Inventor: ALLAN, Robert, Mark, Westbury on Trym Brisol BS10 5ET (GB)
(74) Representative: Camolese, Marco
(86) International application number: PCT/GB2006/001007
(87) International publication number: WO 2006/100459

(56) References cited:
- WO-A-03/015353
- FR-A1- 2 828 625
- US-A1- 2003 045 290
- "3GPP TS 23.060 version 6.7.0 Release 6" ETSI TS 123 060 V6.7.0, December 2004 (2004-12), pages 1-211, XP014027467

## Description

### Field of the Invention

The present invention relates to telecommunications systems for providing internet protocol multimedia communications sessions to mobile user equipment.

### Background of the Invention

Internet protocol multimedia Subsystems (IMS) can be used to provide a raft of internet protocol multimedia services such as voice, video, text, instant messaging, games and presence information. In one implementation IMS utilizes a protocol known as the Session Initiation Protocol (SIP) and is being standardized in the Third Generation Project Partnership (3 GPP). A SIP application plane exists for registration and control of a communication session, which handles SIP messages. The SIP application plane then co-ordinates with a media plane. Such IMS services can be provided to mobile user equipment using a packet radio network, which supports packet data communications, such as the General Packet Radio System (GPRS). An IMS communications session may be provided to a mobile user equipment, supported by a packet radio network from a home network for the mobile user equipment. However, the mobile user equipment may roam to another mobile radio network, referred to as a visited mobile radio network.

Those acquainted with IMS communications will be aware that in order to establish an IMS communications session it is necessary to provide an Access Point Name (APN) from which the IMS communication session is controlled/ The APN is a connection point for the IMS communications session. For example, in the GPP IMS, the APN is conventionally arranged to be a gateway support node (GGSN) and a Proxy-Call State Control Function (P-CSCF) of the IMS network. Conventionally, the mobile user equipment is arranged to use the APN of the GGSN/P-CSCF of the mobile user's home network. However, this may not be the most appropriate APN to use, if the mobile user equipment has roamed to a visited network.

The Standard specification "3GPP TS 23.060 version 6.7.0 Release 6", ETSI TS 123 060 V6.7.0, December 2004, describes the main features and functions (the stage-2 service description) of a General Packet Radio System (GPRS).

### Summary of Invention

According to the present invention there is provided a telecommunications system for providing an internet protocol multimedia communications session to a mobile user equipment. The telecommunications system comprises an internet protocol multimedia subsystem operable to provide the internet protocol multimedia communications session to the mobile user equipment, the internet protocol multimedia subsystem including a call state control function, and a roaming mobile application server. The telecommunications system includes a packet radio network operable in response to a packet data protocol context application request from the mobile user equipment providing an access point name for terminating the multi-media communications session, to confirm, using a domain name server whether the access point name identifies one of a gateway support node of the packet radio network or a gateway support node of a home network of the mobile user equipment. The mobile user equipment is operable to communicate a register message to the call state control function of the internet protocol subsystem for registering the multi-media communications session with the internet protocol multimedia subsystem. The call state control function is operable to communicate the register message to the roaming mobile applications server. The roaming mobile application server is responsive to the register message, to determine whether the access point name, which was used to communicate the register message, corresponds with a preferred access point name for the mobile user equipment. If the access point name does not correspond to the preferred access point name, the roaming mobile applications server is operable to communicate a re-register message providing the preferred access point name to the mobile user equipment for use in terminating the communications session at a gateway support node identified by the preferred access point name.

Embodiments of the present invention can provide a telecommunications system in which a mobile user equipment is directed to a particular access point name, where a communications session is to be terminated. An access point name is an identifier of an address of a gateway support node of a packet radio network at which communications session is terminated and from which the communications session is controlled. A call state control function of the internet protocol multimedia subsystem (usually a proxy-call state control function) is usually associated with the gateway support node. For example, the gateway support node typically provides a point at which policy enforcement for a communications session bearer is carried out.

Known arrangements can allow the access point name to identify the gateway support node or the call state control function in the visited network or the home network. This is implemented for each user equipment by defining the access point name in the Home Location Register (HLR) of the home network, and including a marker to indicate whether or not an access point name can be allowed in a visited network. However, as a result it is only possible to either always terminate the communications session in the home network or always terminate the communications session in the visited network. As such, changing the marker in the HLR will not work on a, per network basis, because the mobile user equipment (user agent) will not know whether to use a home network terminated APN or a visited network terminated APN.

According to the present invention, the access point name can be determined by the operator of the mobile user equipment's home network, by arranging for a roaming mobile application server within an internet protocol multimedia subsystem to provide the mobile user equipment which registers for a session with a preferred access point name. The roaming mobile applications server rejects the registration by the mobile user equipment for a communications session for anything other than the preferred access point name. The mobile user equipment is arranged to re-register with the preferred access point name.

Providing a telecommunications system in which the operator of the mobile user equipment's home network can specify the access point name, which should be used can provide certain advantages. For example, as IMS related services are deployed, the operator may wish to change the access point name for terminating a communications session. For example, consider some of the following cases:
1. The subscriber of the mobile user equipment is a UK based subscriber and is visiting Belgium where hypothetically the gateway support nodes do not support 3GPP IMS release 5 functionality. In this case the operator of the home network may therefore prefer the mobile user equipment to use the gateway support node of the home network as the access point name
2. The mobile user equipment roams to Australia. For this example, when a call is made, it is desirable to terminate GPRS / UMTS PS communications session in Australia - the relevant GGSN for the subscribers data session to be in AustraliaThis is in order to reduce inefficient stack and backhaul costs if the gateway support node of the home network were used, because the gateway support node of the home network has less understanding of radio conditions in the visited network and because of extra delay and echo may be introduced, if all the voice traffic is being back hauled to the home network.
3. The mobile user equipment roams to a south East Asian Country, (e.g. Thailand) which does not provide a gateway support node, which can support the 3GPP IMS, release 5 functionality. For this example, the operator does not want to use the gateway support node of the home network, to avoid the disadvantages highlighted in 2. For this case, the operator uses a regional gateway support node (say in Singapore). A regional gateway support node is a gateway support node which is trusted by the operator of the home network, because, for example, it includes 3GPP IMS release 5 functionality. The operator therefore provides the access point name of the regional gateway support node to the mobile user equipment.

Accordingly, embodiments of the present invention can provide an operator of the home network with a facility for determining the access point name, which the mobile user equipment should use. The operator may select the access point name, in accordance with a predetermined policy and business rules. As such, the access point name may change as an operator of a visited network improves the gateway support node and demonstrates that the gateway support node provides 3GPP IMS release 5 functionality. Furthermore the operator may determine the access point name to be used in accordance with different times of the day when communications sessions are initiated, the subscriber and regulatory requirements. The home network therefore determines the connection configuration that is used, i.e. a VPLMN base GGSN, a HPLN base GGSN, or a Regional based GGSN. As such, improved operational control of the VPLMN and the mobile user equipment is provided to the operator of the HPLMN.

Embodiments of the present invention can be implemented with little or no change to the network elements of a standardized packet radio network such as the GGSN, SGSN of a GPRS network. Implementation of the embodiments can be effected with little or no change to the IMS, HSS, GGSN, DNS, which are otherwise transparent to the implementation of embodiments of the present invention. Changes are substantially limited to the mobile user equipment and to the additional to the IMS network of a roaming mobile application server.

Various further aspects and features of the present invention are defined in the appended claims and include a roaming mobile applications server, a mobile user equipment, a computer program and a method of providing an internet protocol multimedia communications session to a mobile user equipment.

### Brief Description of the Drawings

Embodiments of the present invention will now be described by way of example only with reference to the accompanying drawings where like parts are provided with corresponding reference numerals and in which:
Figure 1 is a schematic block diagram of two packet radio networks illustrating a process in which a mobile user equipment roams from one of the packet radio networks to the other;
Figure 2 is a schematic block diagram of telecommunications system including two packet radio networks and an internet protocol multimedia subsystem in which an access point name used by a roaming mobile subscriber is controlled by a roaming mobile applications server within the internet protocol multimedia subsystem;
Figure 3 is a schematic block diagram illustrating messages which are exchanged between components of the telecommunications system shown in Figure 2 - this is based on the 3GPP architecture, as defined in 3GPP 23.002
Figure 4 is a schematic illustration of a mobile user equipment which is operable to select one of a plurality of access point names;
Figure 5 is a flow diagram illustrating a process in which a mobile user equipment registers for a communications session using a predetermined access point name; and
Figure 6 is a flow diagram illustrating a process in which the roaming mobile applications server in the internet protocol multimedia subsystem determines the access point name which is preferred by an operator of the home network.

### Description of the Preferred Embodiments

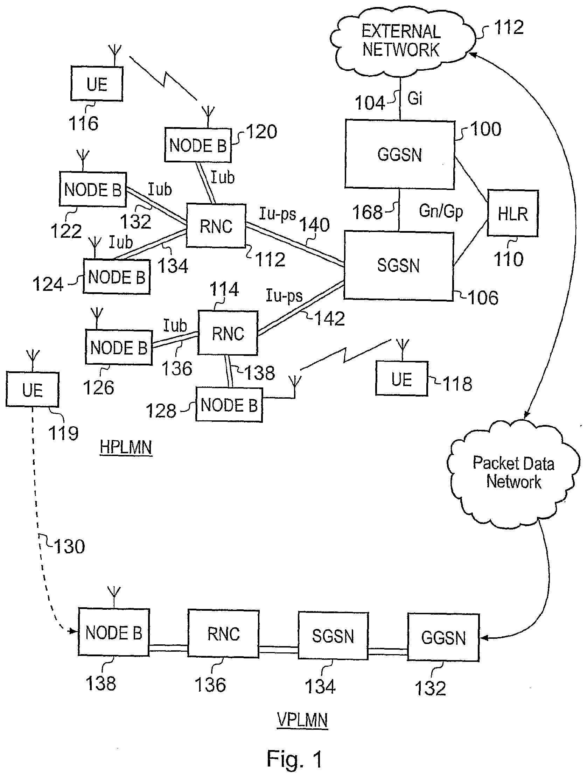

A telecommunications system with which embodiments of the present invention find application is illustrated in Figure 1. In Figure 1 two packet radio networks are shown which conform to the GPRS/UMTS standard. A first of the packet radio networks forms a home public land mobile radio network HPLMN of a mobile user equipment UE which roams to a second of the packet radio networks which forms a visited public land mobile network VPLMN. The first home network HPLMN is illustrated in more detail than the second visited network VPLMN. A more detailed explanation of the parts for the packet radio networks shown in Figure 1 is provided in Annex 1. Figure 1 has been provided as an example of a mobile radio network in accordance with the GPRS/UMTS standard with which embodiments of the present invention find application. However, it will be appreciated that embodiments of the present invention find application with other mobile radio networks such as GSM, so that for example the Node Bs in Figure 1 could be replaced with Base Transceiver Stations (BTS) and the RNCs could be replaced with Base Station Controllers (BSC).

As shown in Figure 1, the home network includes a GPRS Gateway Support Node (GGSN) 100 which provides an interface between an external network 112 and the home network HPLMN for communicating internet packet data to and from the external network for mobile user equipment which are attached to the network HPLMN. The home network HPLMN shown in Figure 1 includes a plurality of base transceiver stations, which are referred to in the UMTS standard as Node Bs. The Node Bs 120, 122, 124, 126, 128 are connected by Radio Network Controllers (RNC) to an Serving GPRS Support Nodes (SGSN) 106 which is connected to the GGSN 100. As shown in Figure 1, mobile user equipment 116, 118 communicate radio signals in accordance with the Universal Terrestrial Radio Access Network (UTRAN) standard within a radio coverage area provided by the Node Bs.

In accordance with a roaming arrangement provided by the GPRS/UMTS standard, mobile user equipment may roam from one network to another. As shown by a broken line arrow 130 the mobile user equipment 119 roams from the home network HPLMN to the visited network VPLMN, attaching to a Node B 138 within the visited network VPLMN. In Figure 1 the second visited packet network VPLMN includes a GGSN 132, a SGSN 134, an RNC 136 and the Node B 138 which operate in the same way as the corresponding elements shown in the first packet radio network HPLMN.

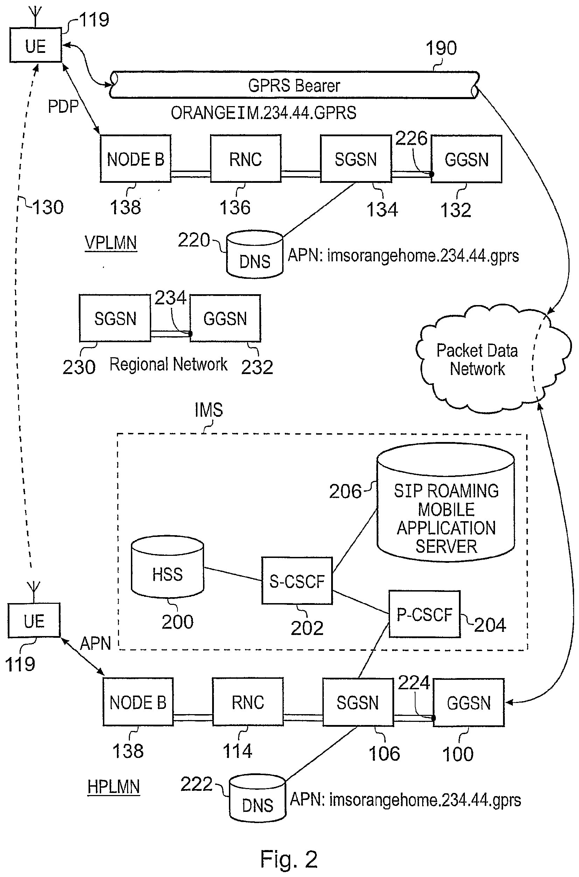

As will be appreciated, the visited network VPLMN may be not only in a different country, but also in a different continent. As internet protocol multimedia subsystem (IMS) related services are deployed it will be desirable to control the GGSN and Proxy-Call State Control Function (P-CSCF) of the IMS network, which the mobile user equipment uses to terminate a communications session. As mentioned above, the GGSN/P-CSC which is used to terminate a communications session is identified by an Access Point Name (APN). This is because if the mobile user equipment roams to not only another country but another continent, then there may be circumstances in which it is appropriate for the mobile user equipment to use the GGSN/P-CSCF of the visited network as the access point name. Alternatively, in other circumstances it may be appropriate to use either the GGSN/P-CSCF of the home network or indeed the GGSN/P-CSCF of a regional network for the case where the operator does not trust the GGSN/P-CSCF of the visited network. As explained above, this might be because the functionality of the GGSN/P-CSCF at the visited network may not be sufficient to support services which the home mobile operator wishes to provide to its subscribers. An arrangement in which the APN is controlled by the operator of the home network is shown in Figure 2.

In Figure 2 a simplified representation of the visited network VPLMN is shown with the roaming mobile user equipment 119 attached to the Node B 138. Parts which appear in Figure 2, which also appear in Figure 1 have the same alpha-numeric reference numerals. Also shown in Figure 2 is a simplified representation of the home network HPLMN with selected elements from those shown in Figure 1. However, in Figure 2 an IMS is also shown associated with the home network HPLMN.

As those familiar with IMS will appreciate, an IMS provides multimedia communications services to mobile user equipment. Internet protocol packets communicated in accordance with a communications service may be communicated via packet radio networks such as those shown in Figures 1 and 2. In Figure 2 a simplified representation of an IMS is shown to include a Home Subscriber Server (HSS) 200, a Serving Call State Control Function (S-CSCF) 202, and a Proxy Call State Control Function (P-CSCF) 204. Those familiar with IMS will understand the operation of the IMS network and so a full description will not be provided here. However, more detail is available from the 3GPP technical specification TS.23.228.

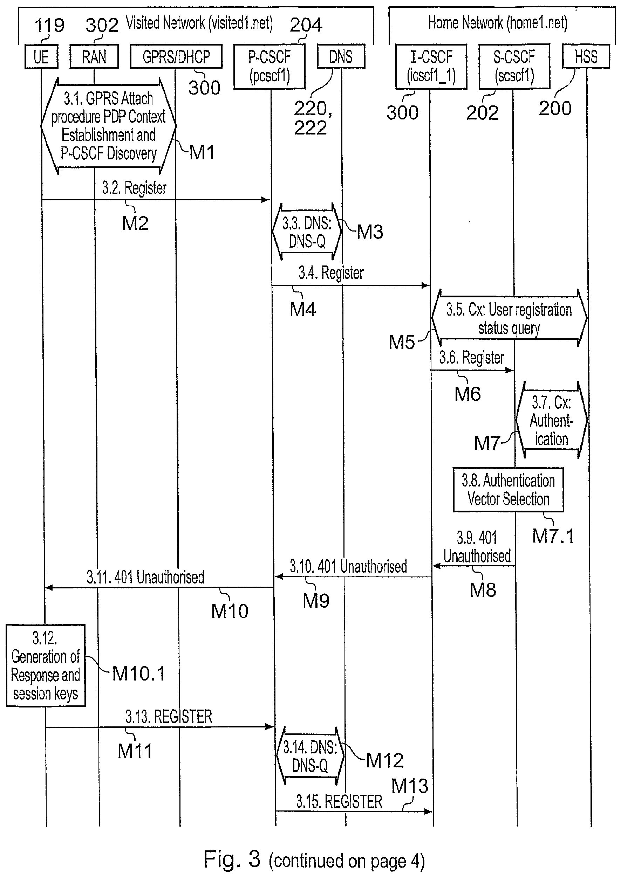

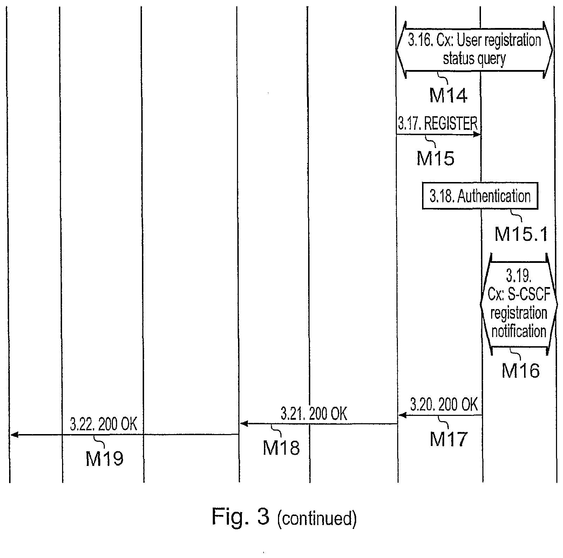

Also included in the IMS shown in Figure 2 is a SIP roaming mobile application server 206. As will be explained shortly, the SIP roaming mobile application server 206 is arranged to control the APN, which the mobile user equipment 119 uses to access IMS services. The operation of the system shown in Figure 2 will now be described with reference to the signalling diagram shown in Figure 3.

After the roaming mobile user equipment 119 has roamed to the visited network VPLMN the mobile user equipment first establishes a GPRS bearer 190 via which packet data communications can be effected. The roaming mobile user equipment 119 therefore first performs a packet data protocol context activation request in accordance with a known part of the GPRS protocol, which forms part of the 3GPP standard. As known to those familiar with the GPRS standard, the packet data protocol (PDP) context application request establishes a bearer through a GPRS network from the mobile user equipment to the GGSN. The PDP context application request is negotiated between the mobile user equipment and a Serving GPRS Support Node (SGSN) of the GPRS network so that as shown in Figure 2, the PDP context activation request is sent via the Node B 138, the radio network controller 136 to the SGSN 134, which proceeds to establish a GPRS bearer 190. The GPRS bearer 190 is then available to the mobile user equipment 119 to communicate internet packets in accordance with a service which the user wishes to use.

In order to establish the GPRS bearer 190 through the PDP context activation request, the mobile user equipment 119 which has attached to the visited network VPLMN must provide an APN to the GGSN in order to select either the GGSN/P-CSFC of the visited network VPLMN or the GGSN/PCSCF of the home network HPLMN. The mobile user equipment 119 therefore provides an APN to the SGSN 134 in order to establish the GPRS bearer. As shown in Figure 2, an example APN is provided to the SGSN which is the APN "Orange IM.234.44.GPRS". Before establishing the GPRS bearer 190, the SGSN 134 operates to identify whether the APN provided by the mobile user equipment 119 corresponds to the GGSN of the visited network VPLMN or the GGSN of the home network HPLMN. To do this the SGSN 134 uses a domain name server 220. The SGSN provides the APN used by the mobile user equipment 119 in the PDP context application request to the domain name server 220, which and operates in combination with a domain name server 222 which is attached to the home network HPLMN. The domain name servers 220, 222 determine whether the APN points to the GGSN of the visited network VPLMN or the GGSN of the home network HPLMN. In the present example the APN provided by the mobile user equipment is "IMS Orange Home.234.44.GPRS". Accordingly, the domain name server 220 and the domain name server 222 of the home network resolve the APN as pointing to the GGSN 100 of the home network HPLMN. The APN therefore points to a connection 224 at the GGSN 100.

In an alternative arrangement the mobile user equipment 119 may provide an APN which points to the GGSN 132 of the visited network VPLMN so that the GPRS bearer terminates at an APN connection point 226 of the GGSN 132 of the visited network VPLMN.

According to the present technique an arrangement is provided which allows the operator of the mobile user equipment's home network to specify the APN which the mobile user equipment should use in order to access IMS services. As such the home operator can not only specify whether the mobile user equipment should use the APN of the visited network or the home network but also an APN associated with a regional network. As shown therefore in Figure 2, parts which represent a regional network include an SGSN 230 and a GGSN 232. An APN provided with the GGSN of the regional network 234 can therefore be specified for terminating a communications session for accessing the IMS services.

In accordance with the present technique once the mobile user equipment 119 has established a GPRS bearer 190 for communicating internet protocol data packets, the mobile user equipment 119 registers for an IMS communications session by sending a SIP register message. In accordance with the 3GPP (24.228) standard the mobile user equipment 119 indicates the packet radio network from which the SIP register message is sent. The SIP register message is then intercepted by the P-CSCF in the IMS of the home network HPLMN and forwarded via the S-CSCF 202 to the SIP roaming mobile applications server 206. The SIP roaming mobile applications server 206 includes functional logic, which analyses the received SIP register message and determines the APN which the mobile user equipment is using in order to send the SIP register message. The operation of the S-CSCF in order to forward the SIP message to the application server is described in TS23.226 and TS24.228. The mobile user equipment can also send details of the APN, which it is currently using including any operator identifier which is being used. Thus, the SIP roaming mobile application server 206 can identify the APN which the mobile user equipment 119 is using. A typical format for the header of the SIP register message is:

| |
|---|
| P-Access-Network-Info: 3GPP-UTRAN-TDD; utran-cell-id-3gpp=234151D0FCE11 |

In other embodiments, the roaming mobile applications server may not receive an identifier of the visited network in the P-Access-Network-Info header. However, other techniques can be used to determine the connectivity to the network by setting the subscriber's SGSN to triggers the HPLMN, using CAMEL. In this case the HPLMN's CAMEL can co-ordinate with the roaming mobile applications server (perhaps via a common database as one implementation), to store details of the APN used.

If the SIP roaming mobile application server 206 identifies that the APN being used by the mobile user equipment 119 does not correspond to an approved APN, which is preferred by the operator then the SIP application server 206 returns a re-register message to the mobile user equipment. The re-register message is referred to in the following description as a "401" message. The re-register message can take the example shown below:
P-Orange-Reselect APN: Orange IMS APN OI = home

Where OI represents the operator identifier set as the home network.

For this example the SIP roaming mobile applications server 206 identifies, in the re-register 401 message, that the mobile user equipment should use the operator identifier of the home network using the APN "*Orange IMS APN*". After the mobile user equipment 119 receives the re-register 401 message, the mobile user equipment adopts the new preferred APN and performs a re-registration with the IMS network using the new APN provided with the 401 message. The SIP roaming mobile application server can then monitor the APN being used and provides services in accordance with that APN.

A more detailed representation of the process via which the APN is controlled by the SIP roaming mobile application server is shown in Figure 3. Figure 3 provides a message flow diagram between the parts of the telecommunications system shown in Figure 2. As shown in Figure 3 the roaming mobile user equipment 119 first performs a GPRS attach procedure using a PDP context establishment and P-CSCF discover message exchange M1 with a GPRS/DHCP server which forms part of the visited network 300. The roaming mobile user equipment 119 communicates via a radio access network part of the GPRS network 302. As represented by the message exchange M1 the mobile user equipment 119 operates in accordance with the PDP context activation request to discover the P-CSCF using an APN which is already known to the mobile user equipment 119. According to the message exchange M1 therefore, the P-CSCF 204 attached to the SGSN 106 (see Figure 2) is discovered and the SGSN identifies the APN which the mobile user equipment 119 provides for establishing the GPRS bearer and for terminating the communications session.

The mobile user equipment 119 then registers with the IMS network by sending a register message M2 to the P-CSCF 204 of the IMS network. The P-CSCF 204 then negotiates with a domain server 220, 222 to resolve a route to the S_CSCF of the user (the network operator may also choose to place an interrogating Call state Control Function I_CSCF, between the P_CSCF and the S_CSCF). This is effected via a message exchange M3. Once confirmed, the P-CSCF passes the register message M4 to the I-CSCF 300 of the IMS network within the home network of the mobile user equipment 119. The register message M4 triggers an exchange M5 between the I-CSCF 300 and the HSS 200 M5 via which the I-CSCF retrieves data associated with subscriber data providing the status of the mobile user equipment and provides a query as to the status of the mobile user equipment providing the registration message M4. The I-CSCF then passes the register message M6 to the S-CSCF 202.

The S-CSCF performs an authentication M7 with an HSS 200 of the mobile user equipment 119 via a message exchange M7. The authentication message exchange M7 between the S-CSCF 202 and the HSS 200 authenticates the mobile user equipment and triggers the S-CSCF to pass the register message to the roaming mobile application server 206 (see Figure 2 but not shown in Figure 3). The mobile application server 206 determines the APN, which should be used by the mobile user equipment M7.1. Accordingly, the application server 206 generates a re-register 401 message providing the APN, which is preferred by the operator of the home network. The 401 re-register message is sent via messages M8, M9 and M10 from the S-CSCF via the I-SCSCF, the P-CSCF to the mobile user equipment 119.

The mobile user equipment responds to the 401 message by generating a re-registration and also session keys M10.1 for use in performing a secure communication to receive an IMS service from the IMS network. The mobile user equipment then sends a register message M11 to the P-CSCF, which once again performs the DNS query M12 with the DNS 220, 222 to resolve the route to the S_CSCF (often via an I_CSCF). If the APN is authenticated then the P-CSCF passes the registered message to the I-CSCF 300 with a message M13, which again performs the user registration query M14 with the HSS as performed by the message exchange M5. The register message is then passed to the S-CSCF M15 which again performs the authentication process M15.1 to confirm that the mobile user equipment 119 has used the correct APN. The S-CSCF 202 again performs a registration authentication with the HSS 200 corresponding to the message exchange M7 as indicated by the message exchange M16.

As before, the roaming mobile application server 206 performs an authentication of the APN used by the mobile user equipment, which is discovered on receiving the SIP register message via the message M15. However, if the mobile user equipment 119 is using the correct APN, which was sent to the mobile user equipment using the re-register 401 message, the roaming mobile application server 206 sends a 200 OK message M16. The 200 OK message is received at the S-CSCF 202 and forwarded via message M17 to the I-CSCF and then to the P-CSCF via message M18 and then on to the mobile user equipment via the message M19 to complete the SIP registration of the mobile user equipment for an IMS session.

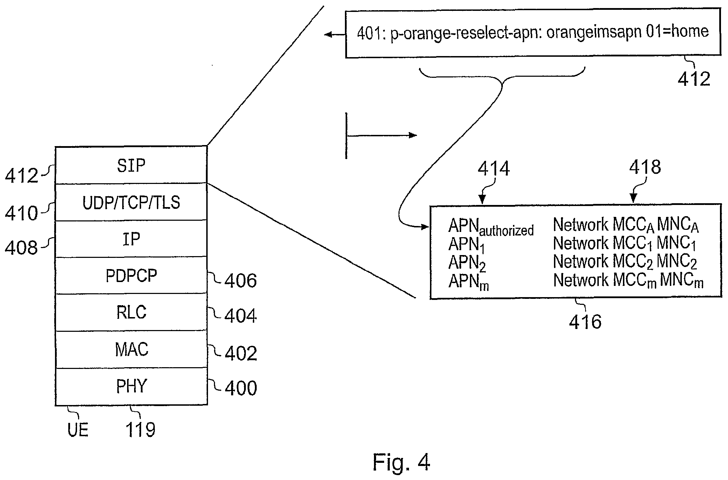

After the mobile user equipment has received the authorised APN which it should be using, the mobile user equipment then stores this APN in an application layer program, so that when making subsequent accesses via the visited network VPLMN then the mobile user equipment will use this authorised APN. Thus, as shown in Figure 4 the mobile user equipment 119 is arranged in a SIP application layer program to store the "Authorised APN". As shown in Figure 4 the mobile user equipment 119 includes several layers in accordance with the OSI standard. Thus the mobile user equipment includes a physical layer 400, a MAC layer 402, a resource allocation control layer 404 and a PDP context protocol layer 406. On top of these layers is an internet protocol layer 408, a transport layer 410 and a SIP application layer 412. The transport layer may operate for example in accordance with the User Datagram Protocol (UDP), the Transmission Control Protocol (TCP) or the Transport Layer Security (TLS) protocol. It is the SIP application layer, which exchanges messages with the IMS network within the home network. As shown in Figure 4, the SIP layer receives the 401 message 412 and extracts the Authorised APN from the 401 message and stores this in a list of APNs which could be used by the mobile user equipment 119 for accessing IMS services with respect to an identifier of the network with which the APN should be used. Thus in a first column 414 of a cache memory 416, the authorised APN is stored with respect to the network identifier which appears in a second column 418. Mobile station therefore holds a list of networks, identified typically by a Mobile Country Code (MCC) and a Mobile Network Code (MNC), which are included in the IMSI with a Mobile Station Identification Number (MSIN). The MNC and MCC are associated with the APN that the mobile user equipment should attempt to use in the network which the MNC and MCC identifies. Generally, therefore the mobile user equipment will be able to identify the correct APN that it should use. If the mobile user equipment roams to a new network, or the network configuration in that network has changed such that the APN connectivity that should be used has changed, then the SIP roaming mobile application server will inform the mobile of the APN that it should use. Thus, according to the present technique, the mobile user equipment developments the cache 416 of APNs versus networks, such that the mobile can generally automatically choose the correct APN, and that the cache is updated by the SIP roaming mobile application server.

As will be appreciated in the examples explained above SIP is one example of a session management protocol and other example implementations may used different session management protocols, such as Secure SIP (SIPs).

### Summary Of Operation

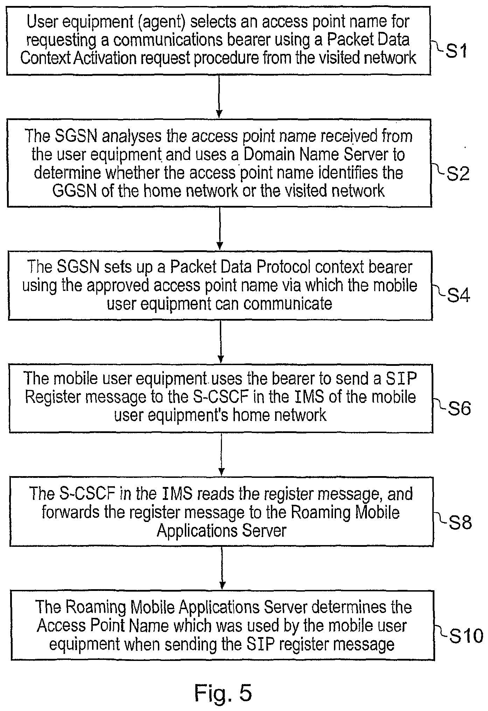

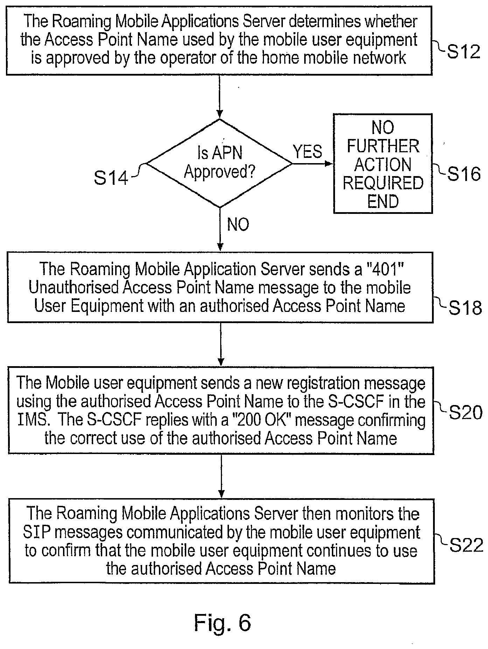

Figure 5 provides a flow diagram summarising the operation of the mobile user equipment in combination with the IMS network which are adapted in accordance with the present technique to provide the mobile user equipment with an authorised APN. Figure 5 is summarised as follows:
S1: The mobile user equipment acting as a user agent with respect to the internet protocol layer selects an APN for requesting a GPRS communications bearer. The GPRS communications bearer is requested using a PDP context activation request procedure from the visited network.
S2: The serving gateway support node (SGSN) analyses the APN received from the mobile user equipment and uses a domain name server to determine whether the APN identifies the GGSN/P-CSCF of the home network or the GGSN/P-CSCF of the visited network. The domain name server therefore resolves the APN address provided by the mobile user equipment in combination with a domain name server which may be attached to the home network. Accordingly, the SGSN uses the domain name server to identify whether the APN refers explicitly to the GGSN/P-CSCF of the visited network or the P-CSCF of the home network.
S4: The SGSN then sets up a GPRS communications bearer using the approved APN via which the mobile user equipment can communicate. Accordingly, the SGSN establishes in combination with the GGSN, a GPRS bearer for communicating internet data packets via which IMS services can be supported.
S6: The mobile user equipment then sends a SIP register message using the GPRS bearer established by the SGSN. The SIP register message is sent to the S-CSCF in the IMS network of the mobile user equipment and home network.
S8: The S-CSCF in the IMS network then reads the SIP register message and in accordance with a predetermined trigger forwards the SIP register message to the roaming mobile application server in the IMS.
S10: The roaming mobile application server determines the APN which was used by the mobile user equipment to send the SIP register message. Accordingly, the roaming mobile application server can determine whether the APN used by the roaming mobile subscriber is approved by the operator of the home network.
   Processing then proceeds in accordance with Figure 6 which represents the operation of the roaming mobile application server to determine whether the APN used by the roaming mobile user equipment is correct. If the APN is not authorised the roaming mobile applications server provides an approved APN for use by the mobile user equipment to access an IMS communications session. Figure 6 is summarised as follows:
S12: The roaming mobile application server determines whether the APN used by the mobile user equipment is approved by the operator of the home network. As mentioned above, there are various ways in which the roaming mobile application server can discover the APN used by the roaming mobile user equipment. The home operator will have programmed service logic into the roaming mobile application server to provide an authorised APN, if the APN used by the roaming mobile user equipment to set up the GPRS bearer is not authorised. The authorised APN may depend on the visited network via which the roaming mobile user equipment is communicating.
S14: The roaming mobile application server then determines whether the APN is approved or not.
S16: If the APN used by the mobile user equipment to set up the GPRS bearer corresponds to an approved APN, then no further action is taken and the application server replies with the 200 OK message. Processing then proceeds in accordance with normal operation to provide the IMS service to the mobile user equipment.
S18: If the APN used by the roaming mobile user equipment is not approved then the application server sends a 401 message indicating that the APN is not authorised. The 401 message also provides the mobile user equipment with an authorised APN. Other error messages could be used, but a 401 is chosen to fit the 3GPP design, as defined in 24.228. This patent applies to other release cause values (typically (but not exclusively) in the 4xx, 5xx, 6xx ranges)
S20: The mobile user equipment then sends a new SIP registration message using the authorised APN to the S-CSCF in the IMS network. The mobile user equipment sends a re-registration message to the S-CSCF in the IMS network, which includes the approved and authorised APN. The S-CSCF replies with a 200 OK message confirming the correct use of the authorised APN.
S22: The roaming mobile application server then determines that the mobile user equipment is using the authorised APN and continues to confirm that the mobile user equipment continues to use the authorised APN using various techniques.

### Confirmation of Authorised APN

In accordance with the present technique the SIP roaming mobile application server is arranged to determine the APN used by the roaming mobile user equipment to confirm that it is using the authorised APN and continues to use the correct APN which it has authorised.

The SIP roaming mobile application server does not explicitly monitor the APN that being used by the roaming mobile user equipment. However, if the user changes the APN and associated connection configuration, during the connection, then the mobile user equipment will have to set up a new APN, and the SIP roaming mobile application server will be aware of this by a range of features. The roaming mobile application server can use one or more of the following (depending on network configuration)
* New IP addresses at the GGSN
* New Registration session started
* New SIP route to the mobile - different P_CSCF, I_CSCF
* New CAMEL triggers

For example, if the roaming mobile user equipment chooses to ignore the "401" re-register message providing the authorised APN and uses an un-authorised APN, then the mobile user equipment will be terminating the communications session at a GGSN/P-CSCF in the wrong network. As such, the mobile user equipment will not be able to continue with the IMS communications session. Furthermore, the P-CSCF from which the re-registration message is received will also not correspond to the IMS for the home network and accordingly the roaming mobile application server can be arranged to identify that the register message is not being used with the correct APN.

In accordance with another technique, a source internet protocol address of the internet packets, which are received by the GGSN can be used to identify the communications session terminated at that GGSN. Accordingly, the roaming mobile applications server can confirm that the GGSN/PCSCF corresponds with the authorised APN.

In a further example the home operator can implement an adaptation of the CAMEL protocol to include a triggering condition to the effect of identifying the APN which is being used. By setting a triggering condition to confirm the APN which is being used, the roaming mobile application server, can compare the APN with that which it has authorised. Accordingly, the application server can determine whether the correct APN is being used.

Various modifications may be made to the embodiments of the invention herein before described without departing from the scope of the present invention. For example, other packet radio networks can be used than the examples given here which conform to the GPRS/UMTS standard, such as GPRS/GSM or CDMA2000. Further other protocols may be used for controlling and establishing media session, so that the invention is not limited to the Session Initiation Protocol.

### ANNEX 1

### GPRS/UMTS Architecture

The terminology and architecture used in Figure 1 corresponds to that used for the UMTS and that proposed for 3G as administered by the 3GPP. In Figure 1, a Gateway GPRS Support Node (GGSN) is connected to an external Packet Data Network 102, (PDN). The external PDN communicates as packets using the Internet Protocol (IP). An interface 104 between the GGSN and the external network is labelled Gi which has been standardised although further aspects are being standardised. Also connected to the GGSN is a Serving GPRS Support Node (SGSN) 106 via an interface 108 labelled as Gn/Gp which is also being standardised.

The GGSN and the SGSN are two of network components, which are required to support GPRS. The GGSN acts as the gateway between the external packet data networks (PDN) and the packet radio network, which supports GPRS. The GGSN contains sufficient information to route incoming IP data packets to the SGSN that is serving a particular User Equipment (UE) which is mobile and receives data via a radio access facility provided by the mobile packet radio network. For the example embodiment the radio access facility is provided in accordance with the Universal Terrestrial Radio Access Network (UTRAN) system which is specified in accordance with the 3GPP standard. The SGSN is connected to the GGSN via a Gn interface if the SGSN is within the same Public Land Mobile Network (PLMN), and connected via the Gp interface to GGSNs belonging to other PLMNs.

An SGSN provides mobility management of UEs which are moving within an area supported by the mobile radio network. To this end the SGSN is provided with access to a Home Location Register (HLR) 110. The SGSN is arranged to route data packets to Radio Network Controllers (RNC) 112, 114 for communication via the UTRAN radio access facility to mobile users UE 116, 118. The UTRAN radio access facility is provided using Node B apparatus 120, 122, 124, 126, 128, which effectively form base transceiver stations providing radio coverage for the area served by the mobile telecommunications network. The interface 130, 132, 134, 136, 138 between each RNC 112, 114 and the Node B apparatus 120, 122, 124, 126, 128, are labelled Iub and conform to an established or evolving standard. Similarly the interfaces 140, 142 between the SGSN and each RNC 112, 114 are labelled as Iu-ps and is an evolving standard.

## Claims

1. A telecommunications system for providing an internet protocol multimedia communications session to a mobile user equipment (119), the telecommunications system comprising
an internet protocol multimedia subsystem (IMS) operable to provide the internet protocol multimedia communications session to the mobile user equipment (119), the internet protocol multimedia subsystem (IMS) including a call state control function (204), and a roaming mobile application server (206),
a packet radio network (VPLMN) operable in response to a packet data protocol context application request from the mobile user equipment (119) providing an access point name for controlling the internet protocol multi-media communications session, to confirm, using a domain name server (DNS) whether the access point name identifies one of a gateway support node of the packet radio network or a gateway support node of a home network (100) of the mobile user equipment (119), the packet radio network (VPLMN) operable to establish a communication bearer (190) for communicating internet data packets with the mobile user equipment (119),
wherein the mobile user equipment (119) is operable to communicate, via the communication bearer, a register message to the call state control function (204) of the internet protocol subsystem (IMS) for registering the multi-media communications session with the internet protocol multimedia subsystem (IMS), the call state control function (204) being operable to communicate the register message to the roaming mobile applications server (206), the roaming mobile application server (206) being responsive to the register message,
to determine whether the access point name, which was used to communicate the register message, corresponds with a preferred access point name for the mobile user equipment (119), and if the access point name does not correspond to the preferred access point name,
to communicate a re-register message providing the preferred access point name to the mobile user equipment (119) for use in controlling the communications session at a gateway support node identified by the preferred access point name.

2. A telecommunications system as claimed in Claim 1, wherein the mobile user equipment (119) includes a list of access point names with respect to identifiers of corresponding packet radio networks, for use in controlling multi-media communications sessions to access services from the internet protocol multimedia subsystem (IMS) when the mobile user equipment (119) is attached to the corresponding packet radio networks, the mobile user equipment being operable to add the preferred access point name to the list of access point names and to use the preferred access point name to access the services from the internet protocol multimedia subsystem (IMS) subsequently for the packet radio network.

3. A telecommunications system as claimed in Claim 1 or 2, wherein the mobile user equipment (119) is operable
to generate a re-registration message using the preferred access point name in response to the re-register message sent from the roaming mobile applications server,
to communicate the re-registration message to the roaming mobile applications server in the internet protocol subsystem via the call state control function (204), the roaming mobile application server (206) being operable to determine whether the access point name used by the mobile user equipment (119) in the re-registration message corresponds to the preferred access point name provided by the call state control function, which was sent to the mobile user equipment in the re-register message.

4. A telecommunications system as claimed in Claim 3, wherein the roaming mobile application server (206) is operable
to identify a proxy-call state control function via which the re-registration message was received from the mobile user equipment (119), and if the proxy-call state control function is not a proxy-call state control function associated with the gateway support node identified by the preferred access name point,
to determine that the mobile user equipment (119) has not used the preferred access point name.

5. A telecommunications system as claimed in Claim 3, wherein the roaming mobile application server (206) is operable
to identify a source internet protocol address used by the mobile user equipment (119) for the communications session,
to determine whether the gateway support node of the preferred access point name terminates the communications session having the identified internet protocol source address, and if not
to determine that the mobile user equipment (119) has not used the preferred access point name.

6. A telecommunications system as claimed in Claim 3, wherein the home network of the mobile user equipment (119) includes data representing a trigger condition, which when loaded into a service control point of the home network causes the service control point to determine whether the access point name used by the mobile user equipment (119) to register with the internet protocol multimedia subsystem (IMS) corresponds to the preferred access point name.

7. A telecommunications system as claimed in Claim 6, wherein the triggering condition is included as part of a customized application for mobile enhanced logic protocol performed by the home network.

8. A telecommunications system as claimed in any preceding Claim, wherein the preferred access point name identifies a gateway support node of a packet radio network within a region of the packet radio network to which the mobile user equipment (119) is attached.

9. A telecommunications system as claimed in any preceding Claim, wherein the register message, the re-register message and the re-registration message are session initiation protocol messages.

10. A roaming mobile application server (206) forming part of an internet protocol multimedia subsystem (IMS), the internet protocol multimedia subsystem being operable
to provide an internet protocol multimedia communications session to a mobile user equipment (119) and includes a call state control function (204), the roaming mobile application server (206) being responsive to a register message received from the mobile user equipment (119) for registering the multi-media communications session with the internet protocol multimedia subsystem (IMS),
to determine whether an access point name, which was used to communicate the register message, corresponds with a preferred access point name for the mobile user equipment (119), and if the access point name does not correspond to the preferred access point name
to communicate a re-register message providing the preferred access point name to the mobile user equipment (119) for use in controlling the communications session at a gateway support node identified by the preferred access point name.

11. A mobile user equipment (119) operable to establish an internet protocol multi-media communications session with an internet protocol multimedia subsystem (IMS), in a packet radio network (VPLMN) operable to establish a communication bearer (190) for communicating internet data packets with the mobile user equipment (119), the internet protocol multimedia subsystem (IMS) being operable to provide the internet protocol multimedia communications session to the mobile user equipment (119) and includes a call state control function and a roaming mobile applications server, the mobile user equipment (119) being operable
to perform a packet data protocol context application request providing an access point name for controlling the internet protocol multi-media communications session,
to communicate a register message, via the communication bearer (190), to a call state control function (204) of the internet protocol subsystem for registering the multi-media communications session with the internet protocol multimedia subsystem (IMS), the call state control function being operable
to communicate the register message to the roaming mobile applications server, the roaming mobile application server (206) being responsive to the register message,
to determine whether the access point name, which was used to communicate the register message, corresponds with a preferred access point name for the mobile user equipment (119), and if the access point name does not correspond to the preferred access point name,
to communicate the preferred access point name to the mobile user equipment (119), for use in controlling the communications session at a gateway support node identified by the preferred access point name, and the mobile user equipment is operable
to receive the preferred access point name, and use the preferred access point name in controlling the communications session at a gateway support node identified by the preferred access point name, and to communicate a re-registration message to the call state control function (204), the re-registration message including the preferred access point name to the roaming mobile applications server.

12. A mobile user equipment (119) as claimed in Claim 11, wherein the mobile user equipment includes a list of access point names with respect to identifiers of corresponding packet radio networks, for use in controlling multi-media communications sessions to access services from the internet protocol multimedia subsystem (IMS) when the mobile user equipment (119) is attached to the corresponding packet radio networks, the mobile user equipment being operable to add the preferred access point name to the list of access point names and to use the preferred access point name to access the services from the internet protocol multimedia subsystem (IMS) subsequently for the packet radio network.

13. A method of providing an internet protocol multimedia communications session to a mobile user equipment (119), in a packet radio network (VPLMN) operable to establish a communication bearer (190) for communicating internet data packets with the mobile user equipment (119), the method comprising
providing an internet protocol multimedia communications session to the mobile user equipment, the internet protocol multimedia subsystem (IMS) including a call state control function, and a roaming mobile application server,
responding to a packet data protocol context application request from a mobile user equipment providing an access point name for controlling the multi-media communications sessions, to confirm, using a domain name server (DNS) whether the access point name identifies one of the gateway support node of the packet radio network or a gateway support node of a home network of the mobile user equipment (119),
communicating, via the communication bearer (190), a register message to the call state control function (204) of the internet protocol subsystem for registering the multi-media communications session with the internet protocol multimedia subsystem (IMS),
communicating the register message from the call state control function (204) to the roaming mobile applications server,
determining in response to the register message whether the access point name, which was used to communicate the register message, corresponds with a preferred access point name for the mobile user equipment (119), and if the access point name does not correspond to the preferred access point name,
communicating a re-register message providing the preferred access point name to the mobile user equipment (119) for use in controlling the communications session at a gateway support node identified by the preferred access point name.

14. A computer program providing computer executable instructions, which when loaded on to a computer performs the method according to claim 13.

15. A medium bearing information representing the computer program as claimed in Claim 14.

## Patentansprüche

1. Ein Telekommunikationssystem zum Bereitstellen einer Internetprotokoll-Multimedia-Kommunikationssitzung an ein mobiles Benutzergerät (119), wobei das Telekommunikationssystem aufweist:
ein Internetprotokoll-Multimedia-Subsystem (IMS) das betreibbar ist, um die Internetprotokoll-Multimedia-Kommunikationssitzung an dem mobilen Benutzergerät (119) bereit zu stellen, wobei das Internetprotokoll-Multimedia-Subsystem (IMS) eine Anrufzustands-Steuerfunktion (204) und einen Roaming-Mobilanwendungsserver (206) umfasst,
ein Paketfunk-Netzwerk (VPLMN), das in Reaktion auf eine Paketdaten-Protokollkontext-Anwendungsanfrage von dem mobilen Benutzergerät (119) betreibbar ist, das einen Zugangspunkt-Namen zum Steuern der Internetprotokoll-Multimedia-Kommunikationssitzung bereitstellt, um unter Verwendung eines Domainnamenservers (DNS) zu bestätigen, ob der Zugangspunkt-Name einen von einem Gateway-Unterstützungsknoten des Paketfunk-Netzwerkes oder einen Gateway-Unterstützungsknoten eines Heimnetzwerkes (100) des mobilen Benutzergerätes (119) identifiziert, wobei das Paketfunk-Netzwerk (VPLMN) betreibbar ist, um einen Kommunikationsträger (190) zum Übermitteln von Internetdaten-Paketen mit dem mobilen Benutzergerät (119) einzurichten,
wobei das mobile Benutzergerät (119) betreibbar ist, über den Kommunikationsträger eine Registriernachricht zu der Anrufzustands-Steuerfunktion (204) des Internetprotokoll-Subsystems (IMS) zur Registrierung der Multimedia-Kommunikationssitzung mit dem Internetprotokoll-Multimedia-Subsystem (IMS) zu übermitteln, wobei die Rufzustands-Steuerfunktion (204) betreibbar ist, um die Registriernachricht an den Roaming-Mobilanwendungsserver (206) zu übermitteln, wobei der Roaming-Mobilanwendungsserver (206) auf die Registriernachricht anspricht,
um zu bestimmen, ob der Zugangspunkt-Name, der zur Kommunikation der Registriernachricht verwendet wurde, mit einem bevorzugten Zugangspunkt-Namen für das mobile Benutzergerät (119) übereinstimmt und, wenn der Zugangspunkt-Name nicht mit dem bevorzugten Zugangspunkt-Namen übereinstimmt,
Übermitteln einer Neuregistrierungs-Nachricht, die den bevorzugten Zugangspunkt-Namen für das mobile Benutzergerät (119) für die Verwendung bei der Steuerung der Kommunikationssitzung an einem Gateway-Unterstützungsknoten bereitstellt, der durch den bevorzugten Zugangspunkt-Namen identifiziert wird.

2. Ein Telekommunikationssystem nach Anspruch 1, wobei das mobile Benutzergerät (119) eine Liste von Zugangspunkt-Namen in Bezug auf Identifikatoren von korrespondierenden Paketfunk-Netzwerken zur Verwendung bei der Steuerung von Multimedia-Kommunikationssitzungen umfasst, um auf Dienste von den Internetprotokoll-Multimedia-Subsystemen (IMS) zuzugreifen, wenn das mobile Benutzergerät (119) an die korrespondierenden Paketfunk-Netzwerke angeschlossen ist, wobei das mobile Benutzergerät betreibbar ist, um den bevorzugten Zugangspunkt-Namen zu der Liste der Zugangspunkt-Namen hinzuzufügen und den bevorzugten Zugangspunkt-Namen zu verwenden, um auf die Dienste aus dem Internetprotokoll-Multimedia-Subsystem (IMS) anschließend für das Paketfunk-Netzwerk zuzugreifen.

3. Ein Telekommunikationssystem nach Anspruch 1 oder 2, wobei das mobile Benutzergerät (119) betreibbar ist,
um eine Neuanmeldungsnachricht unter Verwendung des bevorzugten Zugangspunkt-Namens zu erzeugen, in Reaktion auf die von dem Roaming-Mobilanwendungsserver gesendete Neuregistrierungs-Nachricht,
um die Neuanmeldungsnachricht an den Roaming-Mobilanwendungsserver in dem Internetprotokoll-Subsystem über die Anrufzustands-Steuerfunktion (204) zu übermitteln, wobei der Roaming-Mobilanwendungsserver (206) betreibbar ist, um zu bestimmen, ob der Zugangspunkt-Name, der von dem mobilen Benutzergerät (119) in der Neuanmeldungsnachricht mit dem bevorzugten Zugangspunkt-Namen übereinstimmt, der durch die Anrufzustands-Steuerfunktion bereitgestellt wird, welche an das mobile Benutzungsgerät (119) in der Neuregistrierungs-Nachricht gesendet wurde.

4. Ein Telekommunikationssystem nach Anspruch 2, wobei der Roaming-Mobilanwendungsserver (206) betreibbar ist,
um eine Proxi-Anrufzustands-Steuerfunktion zu identifizieren, über welche die Neuanmeldungsnachricht von dem mobilen Benutzungsgerät (119) empfangen wurde, und, falls die Proxi-Anrufzustands-Steuerfunktion nicht eine Proxi-Anrufzustands-Steuerfunktion ist, welche mit dem Gateway-Unterstützungsknoten verknüpft ist, der durch den bevorzugten Zugangspunkt-Namen identifiziert wurde,
zu ermitteln, dass das mobile Benutzungsgerät (119) nicht den bevorzugten Zugangspunkt-Namen verwendet hat.

5. Ein Telekommunikationssystem nach Anspruch 3, wobei der Roaming-Mobilanwendungsserver (206) betreibbar ist,
um eine Quellen-Internetprotokoll-Adresse zu identifizieren, die von dem mobilen Benutzungsgerät (119) für die Kommunikationssitzung verwendet wurde,
um zu ermitteln, ob der Gateway-Unterstützungsknoten des bevorzugten Zugangspunkt-Namens die Kommunikationssitzung mit der identifizierten Internetprotokoll-Quelladresse beendet, und wenn nicht,
zu bestimmen, dass die mobile Benutzungseinrichtung (119) nicht den bevorzugten Zugangspunkt-Namen verwendet hat.

6. Ein Telekommunikationssystem nach Anspruch 3, wobei das Heim-Netzwerk des mobilen Benutzergerätes (119) Daten umfasst, die eine Trigger-Bedingung darstellen, die, wenn sie in einen Dienstkontrollpunkt des Heim-Netzwerkes geladen werden, bewirkt, dass der Dienstkontrollpunkt ermittelt, ob der Zugangspunkt-Name, der von dem mobilen Benutzungsgerät (119) verwendet wurde, um sich in dem Internetprotokoll-Multimedia-Subsystem (IMS) zu registrieren, mit dem bevorzugten Zugangspunkt-Namen übereinstimmt.

7. Ein Telekommunikationssystem nach Anspruch 6, wobei die Trigger-Bedingung als ein Teil einer angepassten Anwendung für ein mobiles, verbessertes Logikprotokoll enthalten ist, das durch das Heim-Netzwerk ausgeführt wird.

8. Ein Telekommunikationssystem nach einem der vorstehenden Ansprüche, wobei der bevorzugte Zugangspunkt-Name einen Gateway-Unterstützungsknoten eines Paketfunk-Netzwerkes innerhalb eines Bereiches des Paketfunk-Netzwerkes identifiziert, an welchem das mobile Benutzungsgerät (119) angeschlossen ist.

9. Ein Telekommunikationssystem nach einem der vorstehenden Ansprüche, wobei die Registriernachricht, die Neuregistrierungs-Nachricht und die Neuanmeldungs-Nachricht Sitzungsinitüerungs-Protokollnachrichten sind.

10. Ein Roaming-Mobilanwendungsserver (206), der Teil eines Internetprotokoll-Multimedia-Subsystems (IMS) ist, wobei das Internetprotokoll-Multimedia-Subsystem betreibbar ist,
um eine Internetprotokoll-Multimedia-Kommunikationssitzung an einem mobilen Benutzergerät (119) bereitzustellen und eine Anrufzustands-Steuerfunktion (204) zu umfassen, wobei der Roaming-Mobilanwendungsserver (206) auf eine von dem mobilen Benutzergerät (119) empfangene Registriernachricht zur Registrierung der Multimedia-Kommunikationssitzung mit dem Internetprotokoll-Multimedia-Subsystem (IMS) reagiert,
um zu ermitteln, ob ein Zugangspunkt-Name, welcher benutzt wurde, um die Registriernachricht zu übermitteln, mit einem bevorzugten Zugangspunkt-Namen für das mobile Benutzergerät (119) übereinstimmt, und falls der Zugangspunkt-Name nicht mit dem bevorzugten Zugangspunkt-Namen übereinstimmt,
Übermitteln einer Neuregistrierungs-Nachricht, die den bevorzugten Zugangspunkt-Namen für das mobile Benutzergerät (119) für die Verwendung bei der Steuerung der Kommunikationssitzung an einem Gateway-Unterstützungsknoten bereitstellt, der durch den bevorzugten Zugangspunkt-Namen identifiziert wird.

11. Ein mobiles Benutzergerät (119), das betreibbar ist, um eine Internetprotokoll-Multimedia-Kommunikationssitzung mit einem Internetprotokoll-Multimedia-Subsystem (IMS) in einem Paketfunk-Netzwerk (VPLMN) bereit zu stellen, das betreibbar ist, um einen Kommunikationsträger (190) zum Kommunizieren von Internetdaten-Paketen mit der mobilen Benutzereinrichtung (119) einzurichten, wobei das Internetprotokoll-Multimedia-Subsystem (IMS) betreibbar ist, um die Internetprotokoll-Multimedia-Kommunikationssitzung an dem mobilen Benutzergerät (119) bereitzustellen und eine Anrufzustands-Steuerfunktion und einen Roaming-Mobilanwendungsserver umfasst, wobei die mobile Benutzereinrichtung (119) betreibbar ist,
um eine Paketdaten-Protokollkontext-Anwendungsanfrage auszuführen, die einen Zugangspunkt-Namen zum Steuern der Internetprotokoll-Multimedia-Kommunikationssitzung bereitstellt,
um eine Registriernachricht über den Kommunikationsträger (190) an eine Anrufzustands-Steuerfunktion (204) des Internetprotokoll-Multimedia-Subsystems zum Registrieren der Multimedia-Kommunikationssitzung mit dem Internetprotokoll-Multimedia-Subsystem (IMS) zu übermitteln, wobei die Anrufzustands-Steuerfunktion betreibbar ist,
um die Registriernachricht an den Roaming-Mobilanwendungsserver zu übermitteln, wobei der Roaming-Mobilanwendungsserver (206) auf die Registriernachricht anspricht,
um zu ermitteln, ob der Zugangspunkt-Name, der benutzt wurde, um die Registriernachricht zu übermitteln, mit einem bevorzugten Zugangspunkt-Namen für das mobile Benutzergerät (119) übereinstimmt, und falls der Zugangspunkt-Name nicht mit dem bevorzugten Zugangspunkt-Namen übereinstimmt,
Übermitteln des bevorzugten Zugangspunkt-Namens an das mobile Benutzergerät (119) zur Verwendung der Steuerung der Kommunikationssitzung an einem Gateway-Unterstützungsknoten, der durch den bevorzugten Zugangspunkt-Namen identifiziert wurde, und wobei die mobile Benutzereinrichtung betreibbar ist,
um den bevorzugten Zugangspunkt-Namen zu empfangen und den bevorzugten Zugangspunkt-Namen beim Steuern der Kommunikationssitzung an einem Gateway-Unterstützungsknoten zu verwenden, der durch den bevorzugten Zugangspunkt-Namen identifiziert wurde, und um eine Neuanmeldungs-Nachricht an die Anrufzustands-Steuerfunktion (204) zu übermitteln, wobei die Neuanmeldungs-Nachricht den bevorzugten Zugangspunkt-Namen an den Roaming-Mobilanwendungsserver enthält.

12. Eine mobile Benutzereinrichtung (119) nach Anspruch 12, wobei das mobile Benutzergerät eine Liste von Zugangspunkt-Namen in Bezug auf Identifikatoren von korrespondierenden Paketfunk-Netzwerken zur Verwendung bei der Steuerung von Multimedia-Kommunikationssitzungen umfasst, um auf Dienste von den Internetprotokoll-Multimedia-Subsystemen (IMS) zuzugreifen, wenn das mobile Benutzergerät (119) an die korrespondierenden Paketfunk-Netzwerke angeschlossen ist, wobei das mobile Benutzergerät betreibbar ist, um den bevorzugten Zugangspunkt-Namen zu der Liste der Zugangspunkt-Namen hinzuzufügen und den bevorzugten Zugangspunkt-Namen zu verwenden, um auf die Dienste aus dem Internetprotokoll-Multimedia-Subsystem (IMS) anschließend für das Paketfunk-Netzwerk zuzugreifen.

13. Ein Verfahren zum Bereitstellen einer Internetprotokoll-Multimedia-Kommunikationssitzung an einem mobilen Benutzungsgerät (119), in einem Paketfunk-Netzwerk (VPLMN), das betreibbar ist, um einen Kommunikationsträger (190) zum Kommunizieren eines Internetdaten-Paketes mit dem mobilen Benutzergerät (119) einzurichten, wobei das Verfahren aufweist,
Bereitstellen einer Internetprotokoll-Multimedia-Kommunikationssitzung an einem mobilen Benutzergerät, wobei das Internetprotokoll-Multimedia-Subsystem (IMS) eine Anrufzustands-Steuerfunktion und einen Roaming-Mobilanwendungsserver aufweist,
Antworten auf eine Paketdaten-Protokollkontext-Anwendungsanfrage von einem mobilen Benutzergerät, welches einen Zugangspunkt-Namen für das Steuern der Internetprotokoll-Multimedia-Kommunikationssitzung bereitstellt, um zu bestätigen, dass ein Domainnamenserver (DNS) verwendet wird, ob der Zugangspunkt-Name einen der Gateway-Unterstützungsknoten des Paketfunk-Netzwerkes oder einen Gateway-Unterstützungsknoten eines Heim-Netzwerkes des mobilen Benutzergerätes (119) identifiziert,
Kommunizieren einer Registriernachricht über den Kommunikationsträger (190) an die Anrufzustands-Steuerfunktion (204) des Internetprotokoll-Subsystems zum Registrieren der Multimedia-Kommunikationssitzung mit dem Internetprotokoll-Multimedia-Subsystem (IMS),
Kommunizieren der Registriernachricht von der Anrufzustands-Steuerfunktion (204) zu dem Roaming-Mobilanwendungsserver (206),
Bestimmen in Reaktion auf die Registriernachricht, ob der Zugangspunkt-Name, welcher zum Kommunizieren der Registriernachricht verwendet wurde, mit einem bevorzugten Zugangspunkt-Namen für die mobile Benutzereinrichtung (119) übereinstimmt, und, falls der Zugangspunkt-Name nicht mit dem bevorzugten Zugangspunkt-Namen übereinstimmt,
Kommunizieren einer Neuregistrierungs-Nachricht, welche den bevorzugten Zugangspunkt-Namen an der mobilen Benutzereinrichtung (119) zur Verwendung bei der Steuerung der Kommunikationssitzung an einem Gateway-Unterstützungsknoten bereitstellt, welcher durch den bevorzugten Zugangspunkt-Namen identifiziert wurde.

14. Ein Computerprogramm, das computerausführbare Befehle bereitstellt, die, wenn sie auf einem Computer geladen werden, das Verfahren nach Anspruch 13 ausführen.

15. Ein Medium, das die Informationen trägt, welche das Computerprogramm nach Anspruch 14 darstellt.

## Revendications

1. Système de télécommunications pour fournir une session de communications multimédia de protocole Internet à un équipement utilisateur mobile (119), le système de télécommunications comprenant
un sous-système multimédia de protocole Internet (IMS) opérationnel pour fournir la session de communications multimédia de protocole Internet à l'équipement utilisateur mobile (119), le sous-système multimédia de protocole Internet (IMS) comportant une fonction de commande d'état d'appel (204), et un serveur d'application mobile d'itinérance (206),
un réseau de radiocommunication à commutation par paquet (VPLMN) opérationnel en réponse à une demande d'application de contexte de protocole de données de paquet en provenance de l'équipement utilisateur mobile (119) fournissant un nom de point d'accès pour commander la session de communications multimédia de protocole Internet, pour confirmer, à l'aide d'un serveur de nom de domaine (DNS) si le nom de point d'accès identifie l'un d'un noeud de support de passerelle du réseau de radiocommunication à commutation par paquet ou d'un noeud de support de passerelle d'un réseau domestique (100) de l'équipement utilisateur mobile (119), le réseau de radiocommunication à commutation par paquet (VPLMN) étant opérationnel pour établir un support de communication (190) pour communiquer des paquets de données Internet avec l'équipement utilisateur mobile (119),
dans lequel l'équipement utilisateur mobile (119) est opérationnel pour communiquer, via le support de communication, un message d'enregistreur à la fonction de commande d'état d'appel (204) du sous-système de protocole Internet (IMS) pour enregistrer la session de communications multimédia auprès du sous-système multimédia de protocole Internet (IMS), la fonction de commande d'état d'appel (204) étant opérationnelle pour communiquer le message d'enregistreur au serveur d'application mobile d'itinérance (206), le serveur d'application mobile d'itinérance (206) étant réactif au message d'enregistreur,
pour déterminer si le nom de point d'accès, qui a été utilisé pour communiquer le message d'enregistreur, correspond à un nom de point d'accès préféré pour l'équipement utilisateur mobile (119), et si le nom de point d'accès ne correspond pas au nom de point d'accès préféré,
pour communiquer un message de réenregistreur fournissant le nom de point d'accès préféré à l'équipement utilisateur mobile (119) destiné à être utilisé pour commander la session de communications au niveau d'un noeud de support de passerelle identifié par le nom de point d'accès préféré.

2. Système de télécommunications selon la revendication 1, dans lequel l'équipement utilisateur mobile (119) comporte une liste de noms de point d'accès par rapport à des identifiants de réseaux de radiocommunication à commutation par paquet correspondants, destinée à être utilisée pour commander des sessions de communications multimédias pour accéder à des services du sous-système multimédia de protocole Internet (IMS) lorsque l'équipement utilisateur mobile (119) est rattaché aux réseaux de radiocommunication à commutation par paquet correspondants, l'équipement utilisateur mobile étant opérationnel pour ajouter le nom de point d'accès préféré à la liste de noms de point d'accès et pour utiliser le nom de point d'accès préféré pour accéder aux services du sous-système multimédia de protocole Internet (IMS) ultérieurement pour le réseau de radiocommunication à commutation par paquet.

3. Système de télécommunications selon la revendication 1 ou 2, dans lequel l'équipement utilisateur mobile (119) est opérationnel
pour générer un message de réenregistrement à l'aide du nom de point d'accès préféré en réponse au message de réenregistreur envoyé depuis le serveur d'application mobile d'itinérance,
pour communiquer le message de réenregistrement au serveur d'application mobile d'itinérance dans le sous-système de protocole Internet via la fonction de commande d'état d'appel (204), le serveur d'application mobile d'itinérance (206) étant opérationnel pour déterminer si le nom de point d'accès utilisé par l'équipement utilisateur mobile (119) dans le message de réenregistrement correspond au nom de point d'accès préféré fourni par la fonction de commande d'état d'appel, qui a été envoyé à l'équipement utilisateur mobile dans le message de réenregistreur.

4. Système de télécommunications selon la revendication 3, dans lequel le serveur d'application mobile d'itinérance (206) est opérationnel
pour identifier une fonction de commande d'état d'appel de mandataire via laquelle le message de réenregistrement a été reçu en provenance de l'équipement utilisateur mobile (119), et si la fonction de commande d'état d'appel de mandataire n'est pas une fonction de commande d'état d'appel de mandataire associée au noeud de support de passerelle identifié par le nom de point d'accès préféré,
pour déterminer que l'équipement utilisateur mobile (119) n'a pas utilisé le nom de point d'accès préféré.

5. Système de télécommunications selon la revendication 3, dans lequel le serveur d'application mobile d'itinérance (206) est opérationnel
pour identifier une adresse de protocole Internet source utilisée par l'équipement utilisateur mobile (119) pour la session de communications,
pour déterminer si le noeud de support de passerelle du nom de point d'accès préféré termine la session de communications ayant l'adresse source de protocole Internet identifiée, et si ce n'est pas le cas
pour déterminer que l'équipement utilisateur mobile (119) n'a pas utilisé le nom de point d'accès préféré.

6. Système de télécommunications selon la revendication 3, dans lequel le réseau domestique de l'équipement utilisateur mobile (119) comporte des données représentant une condition de déclenchement, qui lorsqu'elles sont chargées dans un point de commande de service du réseau domestique amène le point de commande de service à déterminer si le nom de point d'accès utilisé par l'équipement utilisateur mobile (119) pour s'enregistrer auprès du sous-système multimédia de protocole Internet (IMS) correspond au nom de point d'accès préféré.

7. Système de télécommunications selon la revendication 6, dans lequel la condition de déclenchement est incluse comme faisant partie d'une application personnalisée pour un protocole de logique évolué mobile réalisé par le réseau domestique.

8. Système de télécommunications selon l'une quelconque des revendications précédentes, dans lequel le nom de point d'accès préféré identifie un noeud de support de passerelle d'un réseau de radiocommunication à commutation par paquet au sein d'une région du réseau de radiocommunication à commutation par paquet auquel l'équipement utilisateur mobile (119) est rattaché.

9. Système de télécommunications selon l'une quelconque des revendications précédentes, dans lequel le message d'enregistreur, le message de réenregistreur et le message de réenregistrement sont des messages de protocole d'ouverture de session.

10. Serveur d'application mobile d'itinérance (206) faisant partie d'un sous-système multimédia de protocole Internet (IMS), le sous-système multimédia de protocole Internet étant opérationnel
pour fournir une session de communications multimédia de protocole Internet à un équipement utilisateur mobile (119) et comporte une fonction de commande d'état d'appel (204), le serveur d'application mobile d'itinérance (206) étant réactif à un message d'enregistreur reçu en provenance de l'équipement utilisateur mobile (119) pour enregistrer la session de communications multimédia auprès du sous-système multimédia de protocole Internet (IMS),
pour déterminer si un nom de point d'accès, qui a été utilisé pour communiquer le message d'enregistreur, correspond à un nom de point d'accès préféré pour l'équipement utilisateur mobile (119), et si le nom de point d'accès ne correspond pas au nom de point d'accès préféré,
pour communiquer un message de réenregistreur fournissant le nom de point d'accès préféré à l'équipement utilisateur mobile (119) destiné à être utilisé pour commander la session de communications au niveau d'un noeud de support de passerelle identifié par le nom de point d'accès préféré.

11. Equipement utilisateur mobile (119) opérationnel pour établir une session de communications multimédia de protocole Internet avec un sous-système multimédia de protocole Internet (IMS), dans un réseau de radiocommunication à commutation par paquet (VPLMN) opérationnel pour établir un support de communication (190) pour communiquer des paquets de données Internet avec l'équipement utilisateur mobile (119), le sous-système multimédia de protocole Internet (IMS) étant opérationnel pour fournir la session de communications multimédia de protocole Internet à l'équipement utilisateur mobile (119) et comporte une fonction de commande d'état d'appel et un serveur d'application mobile d'itinérance, l'équipement utilisateur mobile (119) étant opérationnel
pour réaliser une demande d'application de contexte de protocole de données de paquet fournissant un nom de point d'accès pour commander la session de communications multimédia de protocole Internet,
pour communiquer un message d'enregistreur, via le support de communication (190), à une fonction de commande d'état d'appel (204) du sous-système de protocole Internet pour enregistrer la session de communications multimédia auprès du sous-système multimédia de protocole Internet (IMS), la fonction de commande d'état d'appel étant opérationnelle
pour communiquer le message d'enregistreur au serveur d'application mobile d'itinérance, le serveur d'application mobile d'itinérance (206) étant réactif au message d'enregistreur,
pour déterminer si le nom de point d'accès, qui a été utilisé pour communiquer le message d'enregistreur, correspond à un nom de point d'accès préféré pour l'équipement utilisateur mobile (119), et si le nom de point d'accès ne correspond pas au nom de point d'accès préféré,
pour communiquer le nom de point d'accès préféré à l'équipement utilisateur mobile (119), destiné à être utilisé pour commander la session de communications au niveau d'un noeud de support de passerelle identifié par le nom de point d'accès préféré, et l'équipement utilisateur mobile est opérationnel
pour recevoir le nom de point d'accès préféré, et utiliser le nom de point d'accès préféré pour commander la session de communications au niveau d'un noeud de support de passerelle identifié par le nom de point d'accès préféré, et pour communiquer un message de réenregistrement à la fonction de commande d'état d'appel (204), le message de réenregistrement comportant le nom de point d'accès préféré au serveur d'application mobile d'itinérance.

12. Equipement utilisateur mobile (119) selon la revendication 11, dans lequel l'équipement utilisateur mobile comporte une liste de noms de point d'accès par rapport à des identifiants de réseaux de radiocommunication à commutation par paquet correspondants, destinée à être utilisée pour commander des sessions de communications multimédias pour accéder à des services du sous-système multimédia de protocole Internet (IMS) lorsque l'équipement utilisateur mobile (119) est rattaché aux réseaux de radiocommunication à commutation par paquet correspondants, l'équipement utilisateur mobile étant opérationnel pour ajouter le nom de point d'accès préféré à la liste de noms de point d'accès et pour utiliser le nom de point d'accès préféré pour accéder aux services du sous-système multimédia de protocole Internet (IMS) ultérieurement pour le réseau de radiocommunication à commutation par paquet.

13. Procédé de fourniture d'une session de communications multimédia de protocole Internet à un équipement utilisateur mobile (119), dans un réseau de radiocommunication à commutation par paquet (VPLMN) opérationnel pour établir un support de communication (190) pour communiquer des paquets de données Internet avec l'équipement utilisateur mobile (119), le procédé comprenant
la fourniture d'une session de communications multimédia de protocole Internet à l'équipement utilisateur mobile, le sous-système multimédia de protocole Internet (IMS) comportant une fonction de commande d'état d'appel, et un serveur d'application mobile d'itinérance,
la réponse à une demande d'application de contexte de protocole de données de paquet en provenance d'un équipement utilisateur mobile fournissant un nom de point d'accès pour commander les sessions de communications multimédias, pour confirmer, à l'aide d'un serveur de nom de domaine (DNS) si le nom de point d'accès identifie l'un du noeud de support de passerelle du réseau de radiocommunication à commutation par paquet ou d'un noeud de support de passerelle d'un réseau domestique de l'équipement utilisateur mobile (119),
la communication, via le support de communication (190), d'un message d'enregistreur à la fonction de commande d'état d'appel (204) du sous-système de protocole Internet pour enregistrer la session de communications multimédia auprès du sous-système multimédia de protocole Internet (IMS),
la communication du message d'enregistreur en provenance de la fonction de commande d'état d'appel (204) au serveur d'application mobile d'itinérance,
la détermination en réponse au message d'enregistreur permettant de savoir si le nom de point d'accès, qui a été utilisé pour communiquer le message d'enregistreur, correspond à un nom de point d'accès préféré pour l'équipement utilisateur mobile (119), et si le nom de point d'accès ne correspond pas au nom de point d'accès préféré,
la communication d'un message de réenregistreur fournissant le nom de point d'accès préféré à l'équipement utilisateur mobile (119) destiné à être utilisé pour commander la session de communications au niveau d'un noeud de support de passerelle identifié par le nom de point d'accès préféré.

14. Programme d'ordinateur fournissant des instructions exécutables par ordinateur qui, lorsqu'il est chargé sur un ordinateur réalise le procédé selon la revendication 13.

15. Support comportant des informations représentant le programme d'ordinateur selon la revendication 14.
